# FASCICULE DE BREVET EUROPEEN

(11) **EP 1 103 361 B1**
(45) Date de publication et mention de la délivrance du brevet: **13.10.2004**
(21) Numéro de dépôt: 00403261.1
(22) Date de dépôt: 22.11.2000
(51) Int. Cl.: B29B 17/00, B29C 47/86, H01B 13/14

(54) **Ligne de fabrication de câble électrique avec récupération de rebuts de matière thermoplastique, et procédé de récupération associé**
Produktionslinie für elektrische Kabel mit Rückgewinnung von thermoplastischen Abfallmaterialien, und entsprechendes Rückgewinnungsverfahren
Production line for electric cable with recovery of waste thermoplastic material, and associated recovery process

(30) Priorité: 26.11.1999 FR 9914894
(43) Date de publication de la demande: 30.05.2001
(73) Titulaire: Axon'Cable S.A., 51210 Montmirail (FR)
(72) Inventeur: Yu, Ning, 51210 Montmirail (FR)
(74) Mandataire: Busnel, Jean-Benoît

(56) Documents cités:
- EP-A- 0 377 275
- EP-A- 0 914 929
- US-A- 4 009 235
- US-A- 4 761 129
- DATABASE WPI Section Ch, Week 199528 Derwent Publications Ltd., London, GB; Class A31, AN 1995-212066 XP002144669 & JP 07 124943 A (MEIKI CO), 16 mai 1995 (1995-05-16)
- PATENT ABSTRACTS OF JAPAN vol. 012, no. 113 (M-683), 9 avril 1988 (1988-04-09) & JP 62 240520 A (MITSUBISHI HEAVY IND LTD), 21 octobre 1987 (1987-10-21)
- DATABASE WPI Section Ch, Week 199516 Derwent Publications Ltd., London, GB; Class A32, AN 1995-118245 XP002144670 & JP 07 040343 A (SEKISUI CHEM), 10 février 1995 (1995-02-10)

## Description

La présente invention concerne une ligne de fabrication de câble électrique permettant la récupération de rebuts de matière thermoplastique, et un procédé de récupération de rebuts de matière thermoplastique sur une ligne de fabrication de câble électrique.

Les matières thermoplastiques telles que le PVC, le PET et les polyoléfines qui sont les plus largement utilisées en particulier dans de nombreuses applications à usage domestique sont déjà recyclées en utilisant le caractère réversible de leur fusion.

Cependant certaines autres matières thermoplastiques telles que les polymères fluorés sont, en raison de leurs très bonnes propriétés thermiques, mécaniques et diélectriques, utilisées notamment dans l'électronique industrielle pour la réalisation de câbles électriques de haute technologie mais dans des quantités moindres. Ces matières sont très onéreuses du fait de la spécificité et de la complexité de leur procédé de synthèse. Leur recyclage est difficile. Cependant, dans tous les cas, le recyclage est facilité si la récupération peut se faire très rapidement, in situ, car la matière récupérée peut être rapidement réutilisée, en mélange avec de la matière "neuve" de caractéristiques identiques.

Le document EP 0 377 275, sur lequel repose le préambule des revendication indépendantes 1 et 6, décrit une filière pour l'enrobage de fil conducteur suivie de moyens de refroidissement.

Cependant, ces moyens de refroidissement sont ceux qui sont classiquement destinés à refroidir la gaine sur le fil électrique. Ils ne sont pas prévus pour fonctionner en cas de récupération de la matière thermoplastique seule, ni associés à d'autres moyens pour accomplir effectivement cette récupération.

La présente invention a pour but de permettre une récupération in situ satisfaisante de la matière thermoplastique qui continue d'être extrudée lorsque le fil conducteur cesse d'être alimenté.

Ce but est atteint selon l'invention au moyen d'une ligne de fabrication selon le revendication 1 et d'un procédé de récupération selon la revendication 6.

Des mises en oeuvre avantageuses sont définies dans les revendications dépendantes.

La récupération in situ de rebuts de matière thermoplastique présente des avantages importants tant sur le plan économique que sur le plan de l'environnement.

En outre, le procédé de récupération de l'invention est particulièrement facile à mettre en oeuvre et ne nécessite pas de transformation des lignes de fabrication existantes.

Ce procédé permet d'effectuer la récupération de la matière thermoplastique et son conditionnement avant recyclage, en une seule opération et directement sur la ligne de fabrication.

La matière récupérée peut ainsi être rapidement réutilisée in situ.

Par ailleurs, la ligne de fabrication selon l'invention ne modifie pas le mode d'extrusion ou d'injection et n'entraîne aucune dégradation de la qualité des câbles.

Enfin ce procédé a d'autant plus d'intérêt que la production de câble se fait en petite série.

L'invention sera mieux comprise à la lecture de la description qui va suivre en référence aux dessins sur lesquels :
la figure 1 représente une vue schématique d'une ligne d'extrusion de câble électrique selon l'invention ;
la figure 2a représente une vue en coupe d'une filière ou tête d'extrusion traditionnelle ; et
la figure 2b représente une vue en coupe de la filière d'extrusion modifiée et de la tuyère de refroidissement.

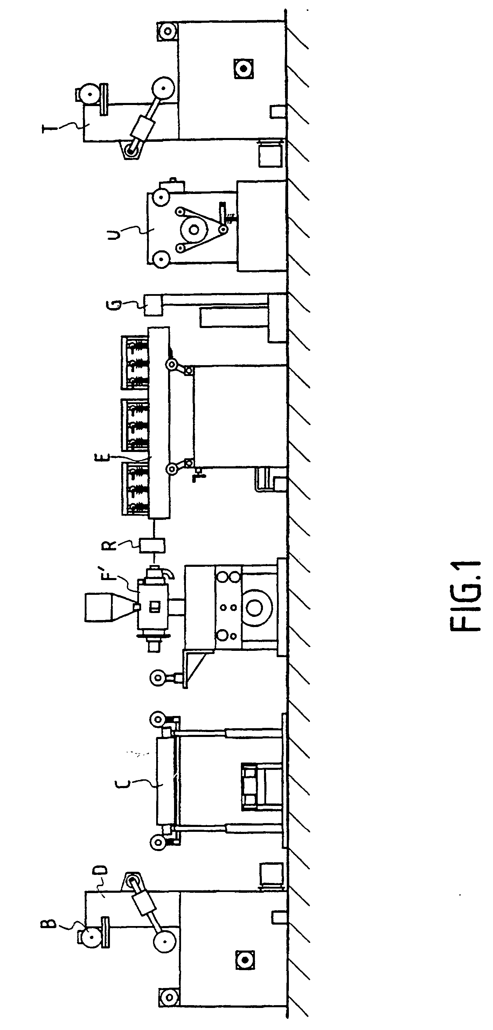

La ligne de fabrication représentée sur la figure 1 est alimentée avec un conducteur filaire stocké sur une bobine B dévidée au moyen d'un dérouleur D. Le conducteur est un fil métallique qui est généralement préchauffé dans une unité de chauffage C avant de pénétrer dans la filière F' où s'effectue l'extrusion de la matière thermoplastique.

Dans la filière, le fil métallique est enrobé de matière thermoplastique. A la sortie de la filière, le câble ainsi réalisé est refroidi par immersion dans un bac E rempli d'eau puis acheminé sous traction vers une unité T équipée d'un tambour de réception de câble, coopérant avec une unité de tirage U disposée en amont.

La ligne comporte, le cas échéant, entre l'unité E et l'unité U, des unités (non représentées) effectuant le contrôle des caractéristiques électriques et/ou dimensionnelles du câble.

De manière générale, l'extrusion est une opération continue qui n'est jamais interrompue même lorsque l'alimentation en fil conducteur est arrêtée en particulier au démarrage et à la fin de la phase de production ou bien en phase de transition lorsqu'il s'agit d'effectuer des changements de lot, de couleur de polymère, de bobine de conducteur.

Les chutes de matière thermoplastique sont alors d'autant plus importantes que la production se fait en petite série.

En vue de récupérer ces chutes, la ligne de fabrication est équipée immédiatement en aval de la filière d'extrusion F', de moyens de refroidissement R de l'extrudat thermoplastique et, en aval du bac E, de moyens de conditionnement G de la matière thermoplastique récupérée.

Il devient ainsi possible de refroidir localement l'extrudat dont la température à la sortie de la filière est comprise entre 145°C et 295°C en fonction de la matière thermoplastique jusqu'à une température comprise entre 50°C et 95°C à ± 5°C, de façon à le solidifier rapidement et au moins partiellement puis de conditionner la matière solidifiée en vue de son recyclage. Le refroidissement est effectué sur une durée de 0,05 à 0,6 s et la vitesse de défilement de l'extrudat est comprise entre 2 m/min et 60 m/min.

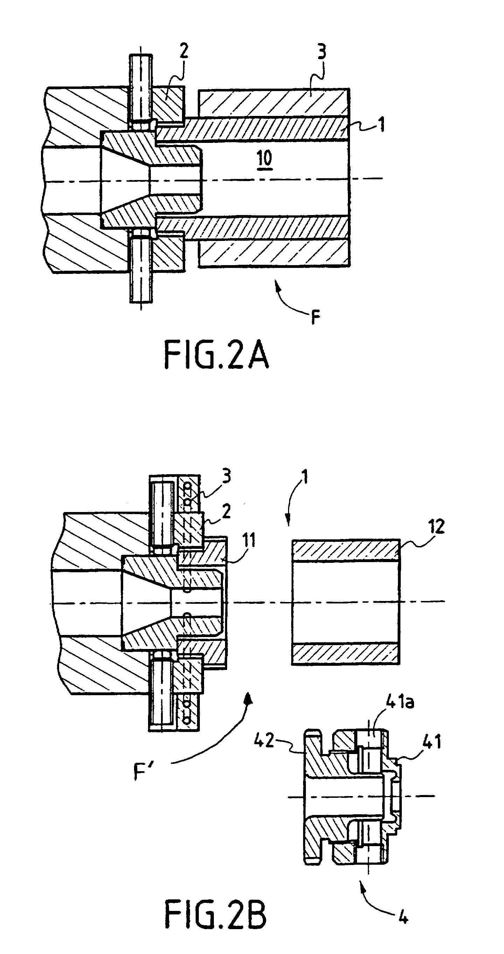

Selon un mode de réalisation, les moyens de refroidissement R sont constitués d'une tuyère (représentée sur la figure 2b) tandis que les moyens de conditionnement comprennent un granulateur équipé de couteaux rotatifs.

La filière modifiée est représenté en détail sur la figure 2b en comparaison avec la figure 2a qui représente une filière d'extrusion traditionnelle. La filière traditionnelle F est pourvue notamment d'un élément de support 1, d'une bride 2 et d'un collier chauffant 3.

Avec une filière de ce type, la matière thermoplastique qui est portée à sa température de fusion s'écoule à travers l'espace interne de la filière et est encore liquide à la sortie de la filière, ce qui entrave sa récupération.

La filière F' modifiée comprend un élément de support 1 en deux parties 11, 12. La première partie 11, courte (c'est-à-dire plus courte que l'élément de support de la filière traditionnelle F) est fixée sur la filière proprement dite, par exemple par vissage, et assure son maintien. La seconde partie 12, plus longue, est amovible. Elle évite de perturber le régime thermique de la filière F'.

L'ensemble de l'élément de support est réalisé en HASTELOY C22. Le collier chauffant 3 est ici monté sur la bride 2 et est réalisé, de préférence, en fonte d'aluminium. La ligne de fabrication selon l'invention comprend, en outre, une tuyère 4 destinée à assurer, en phase de récupération, le refroidissement et la solidification au moins partielle de l'extrudat. La tuyère 4 est constituée, d'une part, d'un corps cylindrique évidé 41 susceptible d'être disposé axialement sur le trajet de l'extrudat liquide, et d'autre part, d'une bague interne 42, destinée à être vissée à l'intérieur du corps 41. Le corps 41 est pourvu latéralement d'au moins un orifice 41a (et ici, de deux orifices) pour l'admission d'air comprimé.

Le flux d'air comprimé s'échappe par l'une des extrémités longitudinales du corps évidé 41, en refroidissant l'extrudat liquide, par contact d'échange thermique.

Le réglage du débit d'air comprimé est effectué en ajustant par vissage la pénétration de la bague 42 dans le corps 41, de façon à obturer ainsi, plus ou moins, l'orifice d'admission 41a. Le débit d'air est compris entre 0,2 et 0,5 m³/min et l'air comprimé à une température voisine de la température ambiante.

La tuyère 4 est réalisée, de préférence, en acier inoxydable.

### Exemples de mise en oeuvre

Sur une ligne d'extrusion de 30 (chiffre indiquant le diamètre de la vis d'extrusion en mm) a été d'abord effectué, l'extrusion d'un câble dont le diamètre est de 0,92 mm sur un conducteur de AWG24 en utilisant des granulés de thermoplastique fluoré FEP de la marque Teflon FEP de Du Pont de Nemour (marque déposée). Le débit de matière dans la vis d'extrusion était de 10 kg/h. Dès que le conducteur ne se présente plus dans l'extrudeuse, la ligne est placée dans la configuration de la Fig. 1 afin de procéder à la récupération de la matière thermoplastique, sans que les conditions opératoires de l'extrusion ne soient modifiées. Des granulés ainsi récupérés sous le granulateur ont été réutilisés en mélange avec de la matière neuve à raison de 25 % pour faire un autre câble du même type. Le câble a été ensuite testé avec succès suivant les spécifications requises.

Les mêmes opérations ont été conduites avec succès en utilisant des granulés de ETFE de la marque Tefzel de Du Pont de Nemour, des granulés de PFA de la marque Teflon PFA de Du Pont de Nemours, des granulés de PVDF de la marque Kynar de Elf Atochem, des granulés de MFA de la marque Hyflon MFA d'Ausimont, des granulés de ECTFE de la marque Halar d'Ausiment, des granulés de polyester élastomère de la marque Hytrel de Du Pont de Nemours, des granulés de PVC de la marque Benvic de Solvay, des granulés de PU de la marque Estane de BF Goodrich avec des débits de matière variant de 5 kg/h à 30 kg/h. On a obtenu un câble conforme aux spécifications concernées.

## Revendications

1. Ligne de fabrication d'un câble électrique permettant la récupération des rebuts de matière plastique, comprenant une filière (F') d'extrusion à chaud de ladite matière plastique et des premiers moyens de refroidissement (E) destinés principalement à refroidir un fil conducteur enrobé de matière thermoplastique à son passage dans ladite filière, **caractérisée en ce que** la filière (F'), comporte une partie amovible (12) assurant la protection thermique de l'extrusion en sortie de filière, des seconds moyens de refroidissement (R) venant prendre place lorsque ledit fil conducteur cesse d'être alimenté alors que la matière thermoplastique continue d'être extrudée, en aval et à proximité immédiate de la sortie de ladite filière et en amont desdits premiers moyens de refroidissement (E), pour assurer le refroidissement et la solidification au moins partielle de l'extrudat, et des moyens de conditionnement (G) de la matière thermoplastique récupérée, placés en aval desdits premiers moyens de refroidissement (E), lesdits seconds moyens de refroidissement et lesdits moyens de conditionnement étant mis en oeuvre lorsque l'alimentation en fil conducteur est interrompue.

2. Ligne de fabrication selon la revendication 1, **caractérisé en ce que** lesdits seconds moyens de refroidissement comportent une tuyère de refroidissement par air.

3. Ligne de fabrication selon la revendication 1 ou 2, **caractérisé en ce que** lesdits moyens de conditionnement comprennent un granulateur équipé de couteaux rotatifs.

4. Ligne de fabrication selon l'une des revendications précédentes, **caractérisé en ce que** ladite filière d'extrusion est pourvue d'un élément de support (1), d'une bride (2) et d'un collier chauffant (3) monté sur ladite bride.

5. Ligne de fabrication selon l'une des revendications précédentes, **caractérisé en ce que** ladite tuyère (4) est constituée, d'une part, d'un corps cylindrique évidé (41) susceptible d'être traversé axialement par l'extrudat et pourvu latéralement d'au moins un orifice (41a) d'admission d'air comprimé et, d'autre part, d'une bague interne (42) de réglage du débit d'air, destinée à être vissée à l'intérieur dudit corps (41) pour obturer partiellement l'orifice d'admission (41a).

6. Procédé de récupération de rebuts de matière thermoplastique sur une ligne de fabrication d'un câble électrique dans laquelle on extrude à chaud ladite matière thermoplastique autour d'un fil conducteur en défilement et on refroidit le fil conducteur ainsi enrobé par des premiers moyens de refroidissement (E), **caractérisé en ce que**, lorsque ledit fil conducteur cesse d'être alimenté alors que ladite matière thermoplastique continue d'être extrudée, on met en oeuvre un refroidissement supplémentaire de ladite matière thermoplastique en plaçant des seconds moyens de refroidissement (R) en aval et immédiatement à la sortie de ladite filière et en amont desdits premiers moyens de refroidissement (E), de façon à rapidement solidifier au moins partiellement l'extrudat, et un conditionnement ultérieur, après solidification complète par les deux étapes de refroidissement de ladite matière, en vue d'un recyclage.

7. Procédé selon la revendication 6, **caractérisé en ce qu'**on refroidit l'extrudat au moyen d'un flux d'air.

8. Procédé selon la revendication 7, **caractérisé en ce que** le débit d'air est compris entre 0,2 et 0,5 m³/min.

9. Procédé selon l'une des revendications 6 à 8, **caractérisé en ce qu'**on refroidit l'extrudat à une température comprise entre 50°C et 95°C.

10. Procédé selon l'une des revendications 6 à 9, **caractérisé en ce qu'**on conditionne ladite matière solidifiée sous forme de granulés en effectuant des découpes successives de l'extrudat refroidi.

11. Procédé selon l'une des revendications 6 à 10, **caractérisé en ce que** la durée dudit refroidissement supplémentaire est comprise 0,05 et 0,6 s pour une vitesse de défilement comprise entre 2 m/min et 60 m/min.

## Patentansprüche

1. Produktionslinie für elektrische Kabel, die die Rückgewinnung von Abfall aus Kunststoffmaterial ermöglicht, die eine Form (F') zur Heißextrusion des Kunststoffmaterials und erste Mittel zum Abkühlen (E), die im Wesentlichen dazu bestimmt sind, einen leitenden Draht, der bei seinem Durchgang durch diese Form mit thermoplastischem Material umhüllt wurde, abzukühlen, aufweist, **dadurch gekennzeichnet, dass** die Form (F') einen unbeweglichen Teil (12) aufweist, der den thermischen Schutz der Extrusion beim Herauskommen aus der Form gewährleistet, zweite Abkühlungsmittel (R), die dann einsetzen, wenn der leitende Draht nicht mehr zugeführt wird, wohingegen das thermoplastische Material weiterhin extrudiert wird, und zwar stromabwärts und in der unmittelbaren Umgebung des Ausgangs der Form, und stromaufwärts von den ersten Abkühlungsmitteln (E), um das Abkühlen und die zumindest teilweise Verfestigung des Extrudats zu gewährleisten, und.Mittel zur Konditionierung (G) des rückgewonnenen thermoplastischen Materials, die stromabwärts der ersten Abkühlungsmittel (E) liegen, wobei die zweiten Abkühlungsmittel und die Mittel zur Konditionierung in Betrieb gesetzt werden, wenn die Zufuhr von leitendem Draht unterbrochen wird.

2. Produktionslinie nach Anspruch 1, **dadurch gekennzeichnet, dass** die zweiten Abkühlungsmittel eine Düse zur Kühlung durch Luft aufweisen.

3. Produktionslinie nach Anspruch 1 oder 2, **dadurch gekennzeichnet, dass** die Konditionierungsmittel einen Granulator aufweisen, der mit rotierenden Messern versehen ist.

4. Produktionslinie nach einem der vorangehenden Ansprüche, **dadurch gekennzeichnet, dass** die Form mit einem Stützglied (1), einem Flansch (2) und einem Heizband (3), das auf dem Flansch angeordnet ist, versehen ist.

5. Produktionslinie nach einem der vorangehenden Ansprüche, **dadurch gekennzeichnet, dass** die Düse (4) einerseits aus einem zylindrischen ausgehöhlten Körper (41) gebildet ist, der axial von dem Extrudat durchlaufen werden kann, und der seitlich mit mindestens einer Zugangsöffnung (41a) für Druckluft versehen ist, und andererseits aus einem Innenring (42) zum Steuern des Luftstroms, der dazu bestimmt ist, im Inneren des Körpers (41) angeschraubt zu werden, um die Zugangsöffnung (41a) teilweise zu verschließen.

6. Verfahren zum Rückgewinnen von Abfall von thermoplastischem Material auf einer Produktionslinie für elektrische Kabel, auf der man das thermoplastische Material heiß um einen durchlaufenden leitenden Draht herum extrudiert, und man den derartig umhüllten leitenden Draht mittels erster Abkühlmittel (E) abkühlt, **dadurch gekennzeichnet, dass**, wenn der leitende Draht nicht weiter zugeführt wird, während das thermoplastische Material jedoch weiterhin extrudiert wird, man eine zusätzliche Abkühlung des thermoplastischen Materials in Betrieb setzt, indem zweite Abkühlungsmittel (R) stromabwärts und unmittelbar an dem Ausgang der Form und stromaufwärts der ersten Abkühlmittel (E) angeordnet werden, so dass das Extrudat schnell zumindest teilweise verfestigt wird, und eine letzte Konditionierung in Betrieb setzt nach vollständiger Verfestigung durch die zwei Abkühlungsetappen des Materials, im Hinblick auf eine Wiedergewinnung.

7. Verfahren nach Anspruch 6, **dadurch gekennzeichnet, dass** man das Extrudat mittels eines Luftstroms abkühlt.

8. Verfahren nach Anspruch 7, **dadurch gekennzeichnet, dass** die Luftmenge zwischen 0,2 und 0,5 m³/min, beide Werte einschließlich, beträgt.

9. Verfahren nach einem der Ansprüche 6 bis 8, **dadurch gekennzeichnet, dass** man das Extrudat auf eine Temperatur zwischen 50 °C und 95 °C, beide Werte einschließlich, abkühlt.

10. Verfahren nach einem der Ansprüche 6 bis 9, **dadurch gekennzeichnet, dass** man das verfestigte Material in Form von Körnern durch sukzessives Abschneiden des erkalteten Extrudats konditioniert.

11. Verfahren nach einem der Ansprüche 6 bis 10, **dadurch gekennzeichnet, dass** die Dauer des zusätzlichen Abkühlungsprozesses zwischen 0,05 und 0,6 sec, beide Werte einschließlich, bei einer Durchziehgeschwindigkeit zwischen 2 m/min und 60 m/min, beide Werte einschließlich, beträgt.

## Claims

1. Production line for electric cable allowing the recovery of scraps of plastics material, comprising a die (F') for the hot extrusion of said plastics material and first cooling means (E) intended mainly to cool a conductive wire coated with thermoplastics material during its passage through said die, **characterised in that** the die (F') comprises a detachable portion (12) for thermal protection of the extrusion at the die outlet, second cooling means (R) being positioned, when the supply of said conductive wire ceases, whereas the extrusion of thermoplastics material continues, after and in the immediate vicinity of said die outlet and before said first cooling means (E), to cool and at least partially solidify the extrudate, and conditioning means (G) for the recovered thermoplastics material, placed after said first cooling means (E), said second cooling means and said conditioning means being used when the supply of conductive wire is interrupted.

2. Production line according to claim 1, **characterised in that** said second cooling means comprise a nozzle for cooling by means of air.

3. Production line according to claim 1 or 2, **characterised in that** said conditioning means comprise a pelletizer equipped with rotating blades.

4. Production line according to any one of the preceding claims, **characterised in that** said extrusion die is provided with a supporting element (1), a flange (2) and a heating collar (3) mounted on said flange.

5. Production line according to any one of the preceding claims, **characterised in that** said nozzle (4) consists, on the one hand, of a hollowed cylindrical body (41) capable of being axially penetrated by the extrudate and provided laterally with at least one orifice (41a) for the intake of compressed air and, on the other hand, of an internal ring (42) for adjusting the air flow rate and intended to be screwed into said body (41) so as to partially block the intake orifice (41a).

6. Process for the recovery of scraps of thermoplastics material on an electric cable production line, in which said thermoplastics material is hot-extruded around a travelling conductive wire and the thus coated conductive wire is cooled by first cooling means (E), **characterised in that**, when the supply of said conductive wire ceases, whereas extrusion of said thermoplastics material continues, additional cooling of said thermoplastics material is carried out by placing second cooling means (R) after and immediately directly at the outlet of said die and before said first cooling means (E), so the extrudate is rapidly and at least partially solidified, and subsequent conditioning is carried out, after said material has been solidified completely by the two cooling stages, for recycling purposes.

7. Process according to claim 6, **characterised in that** the extrudate is cooled by means of an airflow.

8. Process according to claim 7, **characterised in that** the air flow rate is between 0.2 and 0.5 m³/min.

9. Process according to any one of claims 6 to 8, **characterised in that** the extrudate is cooled to a temperature of between 50 °C and 95 °C.

10. Process according to any one of claims 6 to 9, **characterised in that** said solidified material is conditioned to the form of pellets by successive chopping of the cooled extrudate.

11. Process according to any one of claims 6 to 10, **characterised in that** the duration of said additional cooling is between 0.05 and 0.6 s at a rate of travel of between 2 m/min and 60 m/min.
